# EUROPÄISCHE PATENTSCHRIFT

(11) **EP 1 704 409 B1**
(45) Veröffentlichungstag und Bekanntmachung des Hinweises auf die Patenterteilung: **11.11.2009**
(21) Anmeldenummer: 04804668.4
(22) Anmeldetag: 03.12.2004
(51) Int. Cl.: G01N 27/406

(54) **KERAMISCHER SCHICHTVERBUND MIT BEHEIZBARER FESTELEKTROLYTSCHICHT**
CERAMIC LAMINATED COMPOSITE WITH A HEATABLE SOLID-ELECTROLYTE LAYER
MATERIAU CERAMIQUE COMPOSITE LAMELLAIRE MUNI D'UNE COUCHE D'ELECTROLYTE SOLIDE POUVANT ETRE CHAUFFEE

(30) Priorität: 18.12.2003 DE 10359569
(43) Veröffentlichungstag der Anmeldung: 27.09.2006
(73) Patentinhaber: ROBERT BOSCH GMBH, 70442 Stuttgart (DE)
(72) Erfinder: WAHL, Thomas, 75172 Pforzheim (DE); DIEHL, Lothar, 70839 Gerlingen (DE); RODEWALD, Stefan, 71254 Ditzingen (DE); BUCHHOLZ, Frank, 72654 Neckartenzlingen (DE)
(86) Internationale Anmeldenummer: PCT/EP2004/053254
(87) Internationale Veröffentlichungsnummer: WO 2005/059535

(56) Entgegenhaltungen:
- EP-A- 0 343 533
- EP-A- 0 709 670
- EP-A- 0 720 018
- DE-A1- 3 907 312
- DE-A1- 19 833 862

## Beschreibung

### Stand der Technik

Die Erfindung geht aus von einem keramischen Schichtverbund nach dem Oberbegriff des Anspruchs 1.

Ein solcher Schichtverbund wird als Heizeinrichtung in Sensorelementen für elektrochemische Messfühler, z.B. für Lambdasonden zur Messung der Sauerstoffkonzentration im-Abgas von Brennkraftmaschinen, oder als Temperaturfühler zur Bestimmung der Temperatur eines Mediums, insbesondere des Abgases von Brennkraftmaschinen, verwendet. Der Schichtaufbau wird beispielsweise durch Foliengießen, Siebdrucken, Laminieren und Sintern erhalten.

Bei einem bekannten Sensorelement für eine Lambdasonde (DE 198 34 276 A1) sind insgesamt drei Festelektrolytschichten vorhanden, und die Widerstandsbahn mit ihren beiden Zuleitungsbahnen ist zwischen zwei Isolationsschichten eingebettet, die jeweils eine Festelektrolytschicht bedecken, wobei rings um die beiden Isolationsschichten ein Dichtrahmen angebracht ist, der aus dem gleichen Material wie die Festelektrolytschichten besteht. Während die untere Festelektrolytschicht als Trägerschicht dient, auf der die untere Isolationsschicht aufliegt, ist in der die obere Isolationsschicht überdeckenden Festelektrolytschicht ein Referenzgaskanal ausgespart Auf diese Festelektrolytschicht ist die dritte Festelektrolytschicht aufgesetzt, die auf ihrer Oberseite eine von einer Schutzschicht bedeckte, äußere Mess- oder Nernstelektrode und auf ihrer unteren Seite im Bereich des Referenzgaskanals eine innere Mess- oder Referenzelektrode trägt Die Festelektrolytschichten enthalten im wesentlichen Zirkoniumoxid (ZrO₂) und die Isolationsschichten Aluminiumoxid (Al₂O₃). Nach Aufbringen der Schichten, z.B. im Siebdruckverfahren oder durch Laminieren von gegossenen Folien, wird das Sensorelement bei einer Temperatur von z.B. 1300 -1600° gesintert.

Infolge unterschiedlicher Wärmeausdehnungskoeffizienten der für die Festelektrolytschichten und die Isolationsschichten verwendeten Materialien entstehen, nachdem sich bei der Sinterung ein spannungsfreier Zustand eingestellt hat, beim Abkühlen des Sensorelements im Innern der Isolationsschichten Druckspannungen. Auch die in den Isolationsschichten eingebettete Widerstandsbahn liegt frei in einem in den Isolationsschichten sich ausbildenden Isolationskanal ein, da der Wärmeausdehnungskoeffizient des Materials der Widerstandsbahn, ebenso wie der Wärmeausdehnungskoeffizient des Materials der Festelektrolytschichten, größter ist als der Wärmeausdehnungskoeffizient des Materials der Isolationsschichten. Der bei Sintertemperatur herrschende spannungsfreie Zustand wird bei genügend langsamen Abkühlen auch noch bis zu einer weit unterhalb der Sintertemperatur liegenden Temperatur, der sog. Inversionstemperatur, beibehalten. Bei weiterer Abkühlung stellen sich dann die Druckspannungen ein. Wird im Betrieb des Sensorelements die Inversionstemperatur überschritten, so kehren sich die Spannungsverhältnisse um, und die Isolationsschichten erfahren jetzt durch die sich stärker ausdehnenden Festelektrolytschicht und Widerstandsbahn eine Zugspannung. Durch diese Zugspannungen entstehen in den Isolationsschichten Risse, die sich quer zur Längsrichtung der Isolationsschichten ausbreiten und zur Zerstörung des Sensorelements führen, sobald sie die Isolationsschichten und Festelektmlytschichten durchtrennen und Abgas in den Referenzgaskanal eintritt Aufgrund der niedrigen kritischen Zugspannung des Materials der Isolationsschichten können schon kleine Zugspannungen rissauslösend wirken.

Um die Lebensdauer des Sensorelements zu erhöhen, werden bei dem bekannten Sensorelement dem aluminiumoxidhaltigen Material der Isolationsschichten vor dem Sintern Porenbildner zugesetzt. Durch dieses gezielte Einbringen einer Porosität in das Material der Isolationsschichten wird die Elastizität der Isolationsschichten erhöht und damit die Druck-und Zugspannungen reduziert. Die Reduktion der Materialspannungen tritt aber im wesentlichen im Innern der Isolationsschichten auf und nimmt mit Annäherung an Grenzflächen der Isolationsschichten ab, da hier eine offene Oberfläche vorliegt, in die die Risse gut eintreten können. Solche Grenzflächen treten insbesondere zur Widerstandsbahn hin auf, wo das Material der Isolationsschichten den von der Widerstandsbahn ausgefüllten Isolationskanal ausgeformt hat.

Bei einem bekannten Temperaturfühler zur Bestimmung der Temperatur eines Mediums, insbesondere des Abgases von Brennkraftmaschinen (DE 100 45 940 A1), weist der Schichtverbund eine Trägerschicht aus einem keramischen Oxidmaterial, z.B. yttriumstabilisiertem Zirkoniumoxid, zwei Isolationsschichten aus z.B. Aluminiumoxid, die zwischen sich die elektrische Widerstandbahn mit zwei elektrischen Zuleitungsbahnen einschließen und von den die eine auf der Trägerschicht aufgebracht ist, und eine die von der Trägerschicht abgekehrte andere Isolationsschicht bedeckende Abdeckschicht auf, die aus dem gleichen Material wie die Trägerschicht besteht. Die Widerstandsbahn ist mäanderförmig ausgerührt, während die beiden Zuleitungsbahnen parallel zueinander verlaufen. Die Widerstandsbahn, die den Messbereich des Temperaturfühlers bildet, weist einen größeren elektrischen Widerstand auf als die beiden Zuleitungsbahnen. Dies wird erreicht durch eine Variation der Materialzusammensetzung in der Widerstandsbahn einerseits und in den Zuleitungsbahnen andererseits. Alle Bahnen sind aus Platinpasten hergestellt, die Platin und Aluminiumoxid sowie einen Binder enthalten. Durch unterschiedliche prozentuale Anteile von Platin und Aluminiumoxid wird der spezifische Ohmsche Widerstand des Materials für Widerstandsbahn und Zuleitungsbahn manipuliert. Widerstandsbahn und Zuleitungsbahnen werden durch Aufdrucken der Platinpaste auf die eine Isolationsschicht hergestellt.

Ein bekannter Abgassensor für eine Verbrennungskraftmaschine (EP 0 720 018 A1) weist ein plattenartiges Sensorelement mit einem Substrat, in dem ein Luftreferenzkanal eingeformt ist, und mit einem auf das Substrat aufgedruckten Dickfilmheizer auf. Der Dickfilmheizer besteht aus einem mäanderförmigen Heizelement und zwei zu dem Heizelement führende Zuleitungsbahnen. Das mäanderförmig verlegte Heizelement besteht aus einem Material, das einen gegenüber dem Material der Zuleitungsbahnen größeren spezifischen Ohmschen Widerstand aufweist. Im beschriebenen Ausführungsbeispiel ist der spezifische Widerstand des Materials des Heizelements dreimal größer als der spezifische Widerstand des Materials der Zuleitungsbahnen. Zugleich ist die Breite der Leiterbahn des Heizelements nur ein Drittel so breit wie die Bahnbreite einer Zuleitungsbahn. Dadurch ist sichergestellt, dass der größere Anteil der elektrischen Wärme im Bereich des mäanderförmigen Heizelements erzeugt wird, die Hauptaufgabe der

Zuleitungsbahnen die Zuleitung des elektrischen Stroms bleibt und nur geringe Wärme in den Zuleitungsbahnen erzeugt wird.

### Vorteile der Erfindung

Der erfindungsgemäße keramische Schichtverbund mit dem Merkmalen des Anspruchs 1 hat den Vorteil, dass durch die große Breite der Widerstandbahn, deren Maximierung lediglich durch die Breite des Schichtverbunds begrenzt ist, die Neigung der Isolation zur Rissbildung deutlich reduziert wird. Dies ist zum einen dadurch bedingt, dass die breitere Widerstandsbahn die Wärme über eine große Fläche an die Isolation abgibt und daher beim schnellen Aufheizen weniger überhitzt wird. Zum anderen führen bei der breiten Widerstandsbahn beim Siebdruck entstehende Fehlstellen weit weniger schnell zu Engstellen in der Widerstandsbahn als bei einer schmalen Widerstandsbahn. Dadurch treten keine oder wesentlich weniger lokale Überhitzungen (Hot Spots) auf, die den eingangs beschriebenen Rissmechanismus auslösen. Wird beispielsweise die Breite der Widerstandsbahn größer als 500 µm gemacht, so beträgt die Relation zu den seitlichen Schwankungen des Siebdrucks, mit dem die Widerstandsbahn gedruckt wird, weniger als 5%. Dadurch werden Widerstandsschwankungen, die die Hot Spots auslösen, kleiner als 5%. Zudem mitteln sich die beim Siebdruck aufgrund von Höhenschwankungen der Isolationsschicht entstehenden Schwankungen in der Bahndicke der Widerstandsbahn wegen der größeren Breite der Widerstandsbahn besser heraus, da das Verhältnis von Breite zu Querschnitt der Widerstandsbahn erfindungsgemäß recht groß ist, z.B. größer als 1/14 µm. Durch den unterschiedlich großen spezifischen Ohmschen Widerstand des für die Zuleitungsbahn einerseits und die Widerstandsbahn andererseits verwendeten Materials, z.B. Platin oder Platinlegierungen mit unterschiedlich großen Anteilen von Aluminiumoxid oder Legierungsbestandteilen, wird das Widerstandsverhältnis zwischen Widerstandsbahn und Zuleitungsbahnen in Hinblick auf die Konzentration der Heizleistung in der Widerstandsbahn günstig gehalten.

Durch die in den abhängigen Ansprüchen aufgeführten Maßnahmen sind vorteilhafte Weiterbildungen und Verbesserungen des im Anspruch 1 angegebenen Schichtverbunds möglich.

Gemäß einer vorteilhaften Ausführungsform der Erfindung ist der spezifische Ohmsche Widerstand des Materials der Widerstandsbahn mindestens doppelt so groß gewählt wie der spezifische Ohmsche Widerstand des Materials der Zuleitungsbahnen. Dabei ist vorzugsweise der Temperaturkoeffizient des Materials der Widerstandsbahn kleiner als der Temperaturkoeffizient des Materials der Zuleitungsbahnen.

Gemäß einer vorteilhaften Ausführungsform der Erfindung ist die Breite der Widerstandsbahn mindestens 50% größer als die Breite einer Zuleitungsbahn.

Gemäß einer bevorzugten Ausführungsform der Erfindung besteht die Isolierung, in der die Widerstandsbahn und Zuleitungsbahnen eingebettet sind, aus einer auf der einen Festelektrolytschicht aufgebrachten ersten Isolierschicht, auf der Widerstandsbahn und Zuleitungsbahnen aufgedruckt sind, und einer Widerstandsbahn und Zuleitungsbahnen bedeckenden zweiten Isolierschicht. Die Isolierschichten sind vorzugsweise aus Aluminiumoxid (Al₂O₃) hergestellt.

### Zeichnung

Die Erfindung ist anhand von in der Zeichnung dargestellten Ausführungsbeispielen in der nachfolgenden Beschreibung näher erläutert. Es zeigen:
- Fig. 1: einen Querschnitt eines Sensorelements für eine λ=1-Sonde längs der Linie I - I in Fig. 2,
- Fig. 2: einen Längsschnitt des Sensorelements gemäß Linie II - II in Fig. 1,
- Fig. 3 und 4: jeweils eine gleiche Darstellung wie in Fig. 2 gemäß weiterer Ausführungen des Sensorelements.

### Beschreibung der Ausführungsbeispiele

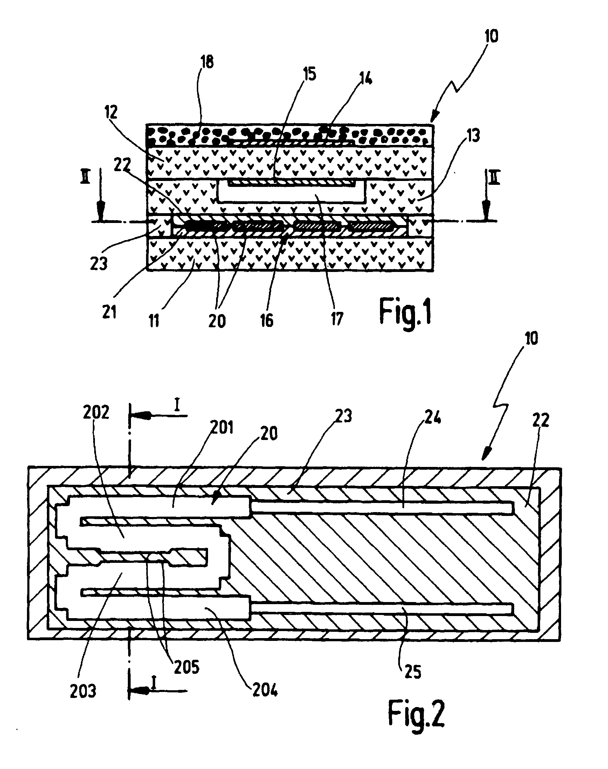

Das in Fig. 1 im Querschnitt dargestellte Sensorelement für eine Sprung- oder λ=1-Sonde zur Messung der Sauerstoffkonzentration im Abgas von Brennkraftmaschinen weist einen Schichtverbund 10 auf, dessen einzelne, aufeinanderliegende Schichten durch Dichtschichtprozesse, wie Foliengießen und/oder durch Siebdruck hergestellt werden. Eine untere erste Festelektrolytschicht 11 dient als Träger für den Aufbau des Schichtverbunds 10, während eine obere zweite Festelektrolytschicht 12 auf ihrer Oberseite eine äußere Messelektrode oder Nernstelektrode 14 und auf ihrer Unterseite eine innere Messelektrode oder Referenzelektrode 15 trägt. Auf der ersten Festelektrolytschicht 11 ist ein elektrischer Heizer 16 angeordnet, und zwischen elektrischem Heizer 16 und der zweiten Festelektrolytschicht 12 liegt eine dritte Festelektrolytschicht 13, in der im Bereich der Referenzelektrode 15 ein Referenzgaskanal 17 ausgespart ist, der mit einem Referenzgas, vorzugsweise Luft, in Verbindung steht. Die Nernstelektrode 14 ist von einer die Oberfläche der zweiten Festelektrolytschicht 12 überziehenden, porösen Schutzschicht 18 abgedeckt. Alle Festelektrolytschichten 11 bis 13 sind aus yttriumstabilisiertem Zirkoniumoxid (ZrO₂) hergestellt.

Der elektrische Heizer 16 umfasst eine in einer Isolierung eingebettete elektrische Widerstandsbahn 20 und zwei Zuleitungsbahnen 24, 25 zu der Widerstandsbahn 20. Die Isolierung besteht aus einer unteren Isolationsschicht 21, die auf der ersten Festelektrolytschicht 11 aufliegt, und einer oberen Isolationsschicht 22, die an der dritten Festelektrolytschicht 13 anliegt. Die Isolationsschichten 21, 22 sind im wesentlichen aus Aluminiumoxid (Al₂O₃) hergestellt und können noch Zusätze enthalten. Beide Isolationsschichten 21, 22 sind jeweils auf der zugeordneten Festelektrolytschicht 11 bzw. 13 befestigt, z.B. durch einen Folienkleber oder durch Aufdrucken. Die beiden Isolationsschichten 21, 22 sind von einem Dichtrahmen 23 umgeben, der ebenso wie die Festelektrolytschichten 11- 13 aus Zirkoniumoxid besteht. Wie aus der Schnittdarstellung gemäß Fig. 2 zu erkennen ist, ist die Widerstandsbahn 20 einstückig an den beiden parallel zueinander verlaufenden Zuleitungsbahnen 24, 25 angeschlossen, die ebenfalls in den beiden Isolationsschichten 21, 22 eingebettet sind. Jede Zuleitungsbahn 24, 25 ist an ihrem von der elektrischen Widerstandsbahn 20 abgekehrten Ende durch die erste Festelektrolytschicht 11 hindurch auf eine auf die freie Oberfläche der ersten Festelektrolytschicht 11 aufgedruckte Kontaktfläche kontaktiert. Über die beiden Kontaktflächen ist die elektrische Widerstandsbahn 20 an eine Stromquelle, z.B. an die Bordnetzspannung des Fahrzeugs, anschließbar. Die elektrische Widerstandsbahn 20 ist, ebenso wie die Zuleitungsbahnen 24, 25 und die Kontaktflächen mit Durchkontaktierung, aus Platin oder einem Platincermet hergestellt. Nach Herstellung des Schichtverbunds 10 wird dieser bei einer Temperatur von ca. 1300 - 1600°C gesintert und anschließend abgekühlt.

Das Aluminiumoxid der Isolationsschichten 21, 22, das die Isolationsschichten 21, 22 umgebenden Zirkoniumoxid der Festelektrolytschichten 11, 13 und des Dichtrahmens 23 sowie das Platin der elektrischen Widerstandsbahn 20 weisen recht unterschiedliche Wärmeausdehnungskoeffizienten auf, wobei die Wärmeausdehnungskoeffizienten des Zirkoniumoxids und des Platins größer sind als der Wärmeausdehnungskoeffizient des Aluminiumoxids. Beim Sintern stellt sich ein spannungsfreier Zustand ein, der bei genügend langsamem Abkühlen auch noch bis zu einer bestimmten Temperatur unterhalb der Sintertemperatur vorliegt. Bei weiterem Abkühlen unter die sog. Inversionstemperatur entstehen im Innern der Isolationsschichten 21, 22 Druckspannungen. Wird das Sensorelement im Betrieb schnell über die Inversionstemperatur hinaus erwärmt, kehren sich die Spannungsverhältnisse im Schichtverbund 10 um, so dass das Aluminiumoxid der Isolationsschichten 21, 22 jetzt vom Zirkoniumoxid und dem Platin einer Zugspannung unterworfen wird. Die maximale Zugspannungskomponente ist dabei entlang der Längserstreckung des Schichtverbunds 10 am größten. Durch die Zugspannungen bilden sich im Aluminiumoxid Risse, die sich senkrecht zur größten Zugspannung, also in der Querebene des Schichtverbunds 10, ausbreiten und zur Zerstörung der Funktion des Sensorelements führen können.

### Um die Gefahr der Rissauslösung zu minimieren sind folgende Maßnahmen getroffen:

In einem ersten Druckschritt werden die beiden Zuleitungsbahnen 24, 25 aus einem Material mit einem kleinen spezifischen Ohmschen Widerstand auf die Isolationsschicht 21 aufgedruckt. Hierfür wird eine Platinpaste mit einem Aluminiumoxid-Stützgerüst von z.B. 5% verwendet Im zweiten Druckschritt wird die Widerstandsbahn 20 aus einem Material mit wesentlich größerem spezifischen Ohmschen Widerstand in Mäanderform auf die untere Isolationsschicht 21 aufgedruckt. Der spezifische Ohmsche Widerstand des Materials für die Widerstandsbahn 20 ist dabei mindestens doppelt so groß gewählt, wie der des Materials für die Zuleitungsbahnen 24, 25 und der Temperaturkoeffizient des Materials der Widerstandsbahn 20 ist kleiner als der des Materials der Zuleitungsbahnen 24, 25. Auch hier wird eine Platinpaste verwendet, die jedoch ein Alunüniurn-Stützgerüst von z.B. 30% besitzt. Die Widerstandsbahn 20 erhält dabei eine recht große Breite, die bezogen auf die zur Verfügung stehende Breite der Isolationsschicht 21 größtmöglich gewählt wird. Die Breite der Widerstandsbahn 20 ist größer als die Breite der Zuleitungsbahnen 24, 25 und ist mindestens 50% größer gewählt Beispielhaft ist die Breite der Widerstandsbahn 20 560µm vorzugsweise um die 1000 µm bemessen.

Im Ausführungsbeispiel der Fig. 2 ist die Widerstandsbahn 20 in drei Mäanderwindungen mit insgesamt vier parallelen Mäanderschenkeln 201 - 204 auf die untere Isolationsschicht 21 aufgedruckt Die einander zugekehrten inneren Mäanderschenkel 202, 203 besitzen in ihrer Bahnbreite jeweils eine lokale Verbreiterung. Die Dicke, mit der die Widerstandsbahn 20 und die Zuleitungsbahnen 24, 25 aufgedruckt werden, ist vorzugsweise gleich und wird kleiner als 14 µm gewählt. Dabei ist die Mindestdicke der Widerstandsbahn 20 aufgrund des Zusammenhalts der Platinkörnern mit ca. 5 µm vorgegeben. Die maximale Breite der Widerstandsbahn 20 ist durch die Breite begrenzt, die von der unteren Isolationsschicht 21 vorgegeben ist, wobei noch zusätzlich Zwischenräume zwischen den Mäanderschenkeln 201 - 204 berücksichtigt werden müssen. Auch diese Zwischenräume werden minimiert.

Durch die extreme Breite der Widerstandsbahn 20 führen Fehlstellen in der Widerstandsbahn 20, die beim Drucken der Widerstandsbahn 20 entstehen, anders als bei schmalen Widerstandsbahnen nicht zu Engstellen, die infolge ihres größeren Widerstands lokale Überhitzungen bewirken und damit den vorstehend beschriebenen Rissmechanismus in den Isolationsschichten 21, 22 aus Aluminiumoxid auslösen. Auch ist durch die große Breite der Widerstandsbahn 20 das Verhältnis von Breite zu Querschnitt recht groß, im genannten Ausführungsbeispiel größer 1/14 µm, so dass Schwankungen in der Dicke der Widerstandsbahn 20 aufgrund von Höhenschwankungen der unteren Isolationsschicht 21 sich wegen der großen Breite der Widerstandsbahn 20 weitgehend herausmitteln.

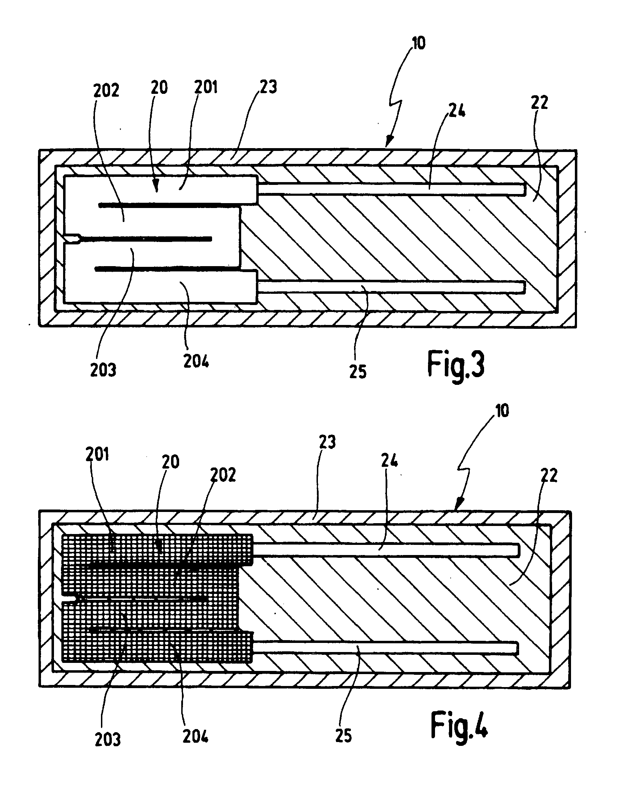

In dem Ausführungsbeispiel der Fig. 3 ist eine extrem breite Widerstandsbahn 20 auf die untere Isolationsschicht 21 aufgedruckt. In der Platinpaste für die Widerstandsbahn 20 sind extrem feine Platinkörner mit einem Korndurchmesser von 200 nm bis 1 µm verwendet Ein solches feinkörniges Platin wird Nano-Platin genannt. Das Nano-Platin wird in einer geringgefüllten Paste mit einem Anteil von 50% eingesetzt, und nach der Entfernung des Binders wird die extrem dünne Widerstandsbahn 20 mit einer Bahndicke kleiner als 5 µm erhalten.

Im Ausführungsbeispiel der Fig. 4 sind die drei Mäanderwindungen der Widerstandsbahn 20 mit den vier Mäanderschenkeln 201 - 204 als Netz gedruckt. Dadurch wird die Anzahl der Kanten, die Streuungen des Siebdrucks unterworfen sind, wesentlich erhöht, und die Widerstandsschwankungen über den Verlauf der Widerstandsbahn 20 mitteln sich weitgehend heraus. Insgesamt entsteht eine Widerstandsbahn 20 mit über die Bahnlänge nahezu konstantem Widerstand, und örtliche Widerstandsschwankungen, die zu Hot Spots führen, sind eliminiert.

Der erfindungsgemäße Schichtverbund mit der in einer Isolierung eingebetteten elektrischen Widerstandsbahn 20 ist nicht nur als elektrischer Heizer für eine λ=1-Sonde oder eine Breitband-Lambdasonde geeignet. Er kann auch als Temperaturfühler, z.B. zur Messung der Temperatur des Abgases von Brennkraftmaschinen, eingesetzt werden. Ein solcher Temperaturfühler ist in der DE 100 45 940 A1 beschrieben. In diesem Fall wird auf die obere Isolationsschicht 22 noch eine Abdeckschicht aufgedruckt, die aus dem gleichen Material bestehen kann wie die erste Festelektrolytschicht 11. Alternativ kann auf diese Abdeckschicht verzichtet und die obere Isolationsschicht 22 gasdicht gesintert werden.

## Patentansprüche

1. Keramischer Schichtverbund mit mindestens einer Festelektrolytschicht (11), mit einer insbesondere mäanderförmig verlaufenden, elektrischen Widerstandsbahn, die in einer Isolierung eingebettet ist, und mit zwei zur Widerstandsbahn (20) führenden elektrischen Zuleitungsbahnen (24, 25), wobei die Widerstandsbahn (20) und die Zuleitungsbahnen (24, 25) in einer Isolierung eingebettet und auf der Festelektrolytschicht (11) angeordnet sind, **dadurch gekennzeichnet, dass** die Widerstandsbahn (20) aus einem Material mit einem gegenüber dem Material der Zuleitungsbahnen (24, 25) größeren spezifischen Ohmschen Widerstand besteht und eine Bahnbreite aufweist, die bezogen auf die zur Verfügung stehende Breite der Isolierung größtmöglich und größer als die Breite einer der Zuleitungsbahnen (24, 25) gemacht ist.

2. Schichtverbund nach Anspruch 1, **dadurch gekennzeichnet, dass** der spezifische Ohmsche Widerstand des Materials der Widerstandsbahn (20) mindestens doppelt so groß ist wie der spezifische Ohmsche Widerstand des Materials der Zuleitungsbahnen (24, 25).

3. Schichtverbund nach Anspruch 1 oder 2, **dadurch gekennzeichnet, dass** der Temperaturkoeffizient des Materials der Widerstandsbahn (20) kleiner ist als der des Materials der Zuleitungsbahnen (24, 25).

4. Schichtverbund nach einem der Ansprüche 1 bis 3, **dadurch gekennzeichnet, dass** die Breite der Widerstandsbahn (20) mindestens 50% größer ist als die Breite einer Zuleitungsbahn (24, 25).

5. Schichtverbund nach einem der Ansprüche 1 bis 4, **dadurch gekennzeichnet, dass** die Breite der Widerstandsbahn (20) größer als 500 µm, vorzugsweise ca. 1000 µm, bemessen ist.

6. Schichtverbund nach einem der Ansprüche 1 bis 5, **dadurch gekennzeichnet, dass** die Bahndicke der Widerstandsbahn (20) kleiner als 14 µm ist.

7. Schichtverbund nach einem der Ansprüche 1 bis 6, **dadurch gekennzeichnet, dass** die Widerstandsbahn (20) aus einer hochohmigen Platinpaste besteht.

8. Schichtverbund nach Anspruch 7, **dadurch gekennzeichnet, dass** die hochohmige Platinpaste ein Aluminiumoxid-Stützgerüst von ca. 30% aufweist.

9. Schichtverbund nach Anspruch 7 oder 8, **dadurch gekennzeichnet, dass** die Bahndicke der Widerstandsbahn (20) mindestens ca. 5 µm beträgt.

10. Schichtverbund nach Anspruch 7, **dadurch gekennzeichnet, dass** die Platinpaste Nano-Platin enthält und die Bahndicke der Widerstandsbahn (20) kleiner 5 µm bemessen ist.

11. Schichtverbund nach einem der Ansprüche 1 bis 10, **dadurch gekennzeichnet, dass** die Widerstandsbahn (20) drei Mäanderwindungen mit insgesamt vier parallel zueinander verlaufenden Mäanderschenkeln (201 - 204) aufweist und dass die einander zugekehrten, innenliegenden Mäanderschenkel (202, 203) in ihrer Bahnbreite lokal verbreitert sind.

12. Schichtverbund nach einem der Ansprüche 1 bis 11, **dadurch gekennzeichnet, dass** die Zuleitungsbahnen (24, 25) aus einer niederohmigen Platinpaste bestehen.

13. Schichtverbund nach Anspruch 12, **dadurch gekennzeichnet, dass** die Platinpaste ein Aluminium-Stützgerüst von ca. 5% aufweist.

14. Schichtverbund nach einem der Ansprüche 1 bis 13, **dadurch gekennzeichnet, dass** die Bahndicke von Widerstandsbahn (20) und Zuleitungsbahnen (24, 25) gleich bemessen ist.

15. Schichtverbund nach einem der Ansprüche 1 bis 14, **dadurch gekennzeichnet, dass** die Isolierung aus einer auf die Festelektrolytschicht (11) aufgebrachten ersten Isolationsschicht (21), auf der die Widerstandsbahn (20) und die Zuleitungsbahnen (24, 25) angeordnet sind, und aus einer die Widerstandsbahn (20) und die Zuleitungsbahnen (24, 25) bedeckenden zweiten Isolationsschicht (22) besteht.

16. Schichtverbund nach einem der Ansprüche 1 bis 15, **gekennzeichnet durch** seine Verwendung als elektrischer Heizer (16) bei einem Sensorelement zur Messung einer physikalischen Eigenschaft eines Gases, vorzugsweise zur Messung der Sauerstoffkonzentration im Abgas von Brennkraftmaschinen, indem das Sensorelement mit einer Festelektrolytschicht (11) an die von der Festelektrolytschicht (11) abgekehrte Seite der in der Isolierung eingebetteten Widerstandsbahn (20) angesetzt ist.

17. Schichtverbund nach einem der Ansprüche 1 bis 15, **gekennzeichnet durch** seine Verwendung als Temperaturfühler zur Messung der Temperatur eines Mediums, insbesondere des Abgases von Brennkraftmaschinen.

## Claims

1. Ceramic laminated composite having at least one solid-electrolyte layer (11), an electrical resistance strip, which is embedded in an insulation while running in particular in a meandering manner, and two electrical supply conductor strips (24, 25) leading to the resistance strip (20), the resistance strip (20) and the supply conductor strips (24, 25) being embedded in an insulation and arranged on the solid-electrolyte layer (11), **characterized in that** the resistance strip (20) consists of a material with a specific ohmic resistance greater than that of the material of the supply conductor strips (24, 25) and has a strip width which is made as great as possible with respect to the available width of the insulation and greater than the width of one of the supply conductor strips (24, 25).

2. Laminated composite according to Claim 1, **characterized in that** the specific ohmic resistance of the material of the resistance strip (20) is at least twice the specific ohmic resistance of the material of the supply conductor strips (24, 25).

3. Laminated composite according to Claim 1 or 2, **characterized in that** the temperature coefficient of the material of the resistance strip (20) is less than that of the material of the supply conductor strips (24, 25).

4. Laminated composite according to one of Claims 1 to 3, **characterized in that** the width of the resistance strip (20) is at least 50% greater than the width of a supply conductor strip (24, 25).

5. Laminated composite according to one of Claims 1 to 4, **characterized in that** the width of the resistance strip (20) is made greater than 500 µm, preferably about 1000 µm.

6. Laminated composite according to one of Claims 1 to 5, **characterized in that** the strip thickness of the resistance strip (20) is less than 14 µm.

7. Laminated composite according to one of Claims 1 to 6, **characterized in that** the resistance strip (20) consists of a high-ohmic platinum paste.

8. Laminated composite according to Claim 7, **characterized in that** the high-ohmic platinum paste has an aluminium oxide supporting structure of about 30%.

9. Laminated composite according to Claim 7 or 8, **characterized in that** the strip thickness of the resistance strip (20) is at least about 5 µm.

10. Laminated composite according to Claim 7, **characterized in that** the platinum paste contains nano platinum and the strip thickness of the resistance strip (20) is made less than 5 µm.

11. Laminated composite according to one of Claims 1 to 10, **characterized in that** the resistance strip (20) has three meander turns with a total of four meander sections (201 - 204) running parallel to one another and **in that** the inner-lying meander sections (202, 203) facing one another are locally widened in their strip width.

12. Laminated composite according to one of Claims 1 to 11, **characterized in that** the supply conductor strips (24, 25) consist of a low-ohmic platinum paste.

13. Laminated composite according to Claim 12, **characterized in that** the platinum paste has an aluminium supporting structure of about 5%.

14. Laminated composite according to one of Claims 1 to 13, **characterized in that** the strip thickness of the resistance strip (20) and of the supply conductor strips (24, 25) are made the same.

15. Laminated composite according to one of Claims 1 to 14, **characterized in that** the insulation comprises a first insulating layer (21), which is applied to the solid-electrolyte layer (11) and on which the resistance strip (20) and the supply conductor strips (24, 25) are arranged, and a second insulating layer (22), which covers the resistance strip (20) and the supply conductor strips (24, 25).

16. Laminated composite according to one of Claims 1 to 15, **characterized by** its use as an electrical heater (16) in a sensor element for measuring a physical property of a gas, preferably for measuring the oxygen concentration in the exhaust gas of internal combustion engines, in that the sensor element is placed with a solid-electrolyte layer (11) against the side of the resistance strip (20) embedded in the insulation that is facing away from the solid-electrolyte layer (11).

17. Laminated composite according to one of Claims 1 to 15, **characterized by** its use as a temperature sensor for measuring the temperature of a medium, in particular the exhaust gas of internal combustion engines.

## Revendications

1. Composite céramique stratifié qui présente au moins une couche (11) d'électrolyte solide dotée d'une piste de résistance électrique qui s'étend en particulier en méandres et qui est incorporée dans une isolation, et des pistes électriquement conductrices d'amenée (24, 25) qui conduisent à la piste de résistance (20), la piste de résistance (20) et les pistes conductrices d'amenée (24, 25) étant incorporées dans une isolation et disposées sur la couche (11) d'électrolyte solide,
**caractérisé en ce que**
la piste de résistance (20) est constituée d'un matériau dont la résistance ohmique spécifique est plus élevée que celle du matériau des pistes d'amenée (24, 25) et présente une largeur aussi grande que possible sur la largeur disponible de l'isolation et plus grande que la largeur d'une des pistes d'amenée (24, 25).

2. Composite stratifié selon la revendication 1, **caractérisé en ce que** la résistance ohmique spécifique du matériau de la piste de résistance (20) vaut au moins le double de la résistance ohmique spécifique du matériau des pistes d'amenée (24, 25).

3. Composite stratifié selon les revendications 1 ou 2, **caractérisé en ce que** le coefficient de température du matériau de la piste de résistance (20) est plus petit que celui du matériau des pistes d'amenée (24, 25) .

4. Composite stratifié selon l'une des revendications 1 à 3, **caractérisé en ce que** la largeur de la piste de résistance (20) est d'au moins 50 % supérieure à la largeur d'une piste d'amenée (24, 25).

5. Composite stratifié selon l'une des revendications 1 à 4, **caractérisé en ce que** la largeur de la piste de résistance (20) est supérieure à 500 µm et est de préférence d'environ 1 000 µm.

6. Composite stratifié selon l'une des revendications 1 à 5, **caractérisé en ce que** l'épaisseur de la piste de résistance (20) est inférieure à 14 m.

7. Composite stratifié selon l'une des revendications 1 à 6, **caractérisé en ce que** la piste de résistance (20) est constituée d'une pâte de platine à haute valeur ohmique.

8. Composite stratifié selon la revendication 7, **caractérisé en ce que** la pâte de platine à haute valeur ohmique présente un réseau de soutien en oxyde d'aluminium d'environ 30 %.

9. Composite stratifié selon les revendications 7 ou 8, **caractérisé en ce que** l'épaisseur de la piste de résistance (20) est d'au moins 5 µm.

10. Composite stratifié selon la revendication 7, **caractérisé en ce que** la pâte de platine contient du nanoplatine et **en ce que** l'épaisseur de la piste de résistance (20) est inférieure à 5 µm.

11. Composite stratifié selon l'une des revendications 1 à 10, **caractérisé en ce que** la piste de résistance (20) présente trois enroulements en méandres qui contiennent en tout quatre branches de méandre (201-204) qui s'étendent parallèlement les unes aux autres et **en ce que** les branches en méandre (202, 203) situées du côté intérieur et tournées l'une vers l'autre ont leur largeur localement augmentée.

12. Composite stratifié selon des revendications 1 à 11, **caractérisé en ce que** les pistes d'amenée (24, 25) sont constituées d'une pâte de platine à basse valeur ohmique.

13. Composite stratifié selon la revendication 12, **caractérisé en ce que** la pâte de platine présente un réseau de soutien en aluminium d'environ 5 %.

14. Composite stratifié selon l'une des revendications 1 à 13, **caractérisé en ce que** la piste de résistance (20) et les pistes d'amenée (24, 25) ont la même épaisseur.

15. Composite stratifié selon l'une des revendications 1 à 14, **caractérisé en ce que** l'isolation est constituée d'une première couche d'isolation (21) appliquée sur la couche d'électrolyte solide (11) et sur laquelle sont disposées la piste de résistance (20) et les pistes d'amenée (24, 25) et d'une deuxième couche d'isolation (22) qui recouvre la piste de résistance (20) et les pistes d'amenée (24, 25).

16. Composite stratifié selon l'une des revendications 1 à 15, **caractérisé en ce qu'**il est utilisé comme dispositif de chauffage électrique (16) d'un élément de détection qui mesure une propriété physique d'un gaz et qui mesure de préférence la concentration en oxygène dans les gaz d'échappement de moteurs à combustion interne, en appliquant l'élément de détection doté d'une couche d'électrolyte solide (11) sur le côté non tourné vers la couche d'électrolyte solide (11) de la piste de résistance (20) incorporée dans l'isolation.

17. Composite stratifié selon l'une des revendications 1 à 15, **caractérisé en ce qu'**il est utilisé comme sonde de température qui mesure la température d'un fluide et en particulier des gaz d'échappement de moteurs à combustion interne (26).
